# EUROPÄISCHE PATENTSCHRIFT

(11) **EP 4 132 867 B1**
(45) Veröffentlichungstag und Bekanntmachung des Hinweises auf die Patenterteilung: **18.11.2026**
(21) Anmeldenummer: 21721002.0
(22) Anmeldetag: 16.04.2021
(51) Int. Cl.: B65G 1/04

(54) **LAGERREGAL ZUR LAGERUNG VON LANGGUT**
STORAGE RACK FOR STORING LONG ITEMS
ÉTAGÈRE DE STOCKAGE POUR STOCKER DES ARTICLES ALLONGÉS

(30) Priorität: 23.04.2020 DE 102020111076
(43) Veröffentlichungstag der Anmeldung: 15.02.2023
(73) Patentinhaber: Hänel GmbH & Co. KG, 74177 Bad Friedrichshall (DE)
(72) Erfinder: REMINDER, Manfred, 74653 Ingelfingen (DE)
(74) Vertreter: Flügel Preissner Schober Seidel
(86) Internationale Anmeldenummer: PCT/EP2021/059965
(87) Internationale Veröffentlichungsnummer: WO 2021/213932

(56) Entgegenhaltungen:
- DE-A1- 102009 033 169
- DE-A1- 102009 051 193
- US-A1- 2006 150 659

## Beschreibung

Die Erfindung betrifft ein Lagerregal zur Lagerung von Langgut, wie beispielsweise einem Aluminiumprofil oder einer Dachrinne, mit einem Gehäuse, das von sich gegenüberliegenden Seitenwänden begrenzt ist, zur Aufnahme einer Vielzahl von Tablaren, in denen das Langgut aufgenommen wird, mit einer ersten Bedienöffnung, die an einer Stirnseite des Gehäuses angeordnet ist und die sich entlang einer Längsrichtung des Lagerregals erstreckt, wobei die erste Bedienöffnung eine Arbeitsfläche aufweist, auf welche ein Tablar zur Beschickung und/oder Entnahme von der Transportvorrichtung eingeführt wird, mit einer Transportvorrichtung zum automatisierten Transportieren der Tablare und mit einer zweiten Bedienöffnung. Derartige Lagerregale sind bekannt und liegen als Vertikallifte oder Umlaufregale vor. Das Lagerregal weist ein Gehäuse auf, an dem eine Bedienöffnung vorgesehen ist. Die Einlagerung und Auslagerung des Lagergutes erfolgt durch den Lagerristen über die Bedienöffnung. Das Lagergut wird auf einem Tablar abgelegt, der dann mittels einer Transportvorrichtung einem in dem Gehäuse des Lagerregals vorgesehen Lagerplatz zugestellt wird. In der EP 0 722 894 A1 wird ein derartiger Vertikallift beschrieben, der zwei mit Abstand zueinander angeordnete Regale und eine zwischenliegende Transportvorrichtung aufweist.

DE 10 2009 033169 A1 offenbart ein gattungsgemäßes Lagerregal geeignet zur Lagerung von Langgut mit einem Gehäuse, einer Transportvorrichtung und mit zwei Bedienöffnungen. Die Bedienöffnungen sind auf einer Seite des Gehäuses nebeneinander angeordnet.

DE 10 2009 051193 A1 offenbart ein gattungsgemäßes Lagerregal geeignet zur Lagerung von Lagergut mit einem Gehäuse, einer Transportvorrichtung und mit zwei Bedienöffnungen. Die Bedienöffnungen sind auf einer Seite des Gehäuses übereinander angeordnet.

Des Weiteren offenbart US 2006/0150659 A1 ein vertikales Lagersystem, das eine erste Kammer, eine zweite Kammer, die an die erste Kammer angrenzt, sowie ein vertikales Hebemodul oder ein vertikales Karussell, das in der ersten und zweiten Kammer positioniert ist, umfasst. Die erste Kammer ist so konfiguriert, dass sie Gegenstände bei einer ersten Temperatur lagert, und die zweite Kammer hat eine Betriebstemperatur, die sich von der ersten Temperatur unterscheidet. Das vertikale Hebemodul oder das vertikale Karussell hat einen ersten Abschnitt, der in der ersten Kammer positioniert ist, und einen zweiten Abschnitt, der in der zweiten Kammer positioniert ist. Die beiden Kammern sind über in die Seitenwände der Kammern eingebrachte Türen begehbar.

Die Einlagerung von Langgut, beispielsweise Aluminiumprofilen oder Dachrinnen mit einer Länge von 3 bis 5 m, über die Bedienöffnung des Lagerregals ist oft schwierig für den Lagerristen durchzuführen, da es aufgrund der Länge des Lagergutes zu Verkantungen in der Bedienöffnung oder auf dem Tablar kommen kann. Hierdurch können auch Schäden an dem Lagergut auftreten. Weiterhin kann der gezielte Zugriff auf Lagergut zur Folge haben kann, nicht benötigtes Lagergut zuerst auszulagern.

Der Erfindung liegt die Aufgabe zugrunde, ein Lagerregal der eingangs genannten Art zu schaffen, das eine einfache und ergonomische Einlagerung von Langgut ermöglicht.

Zur Lösung der Aufgabe wird ein Lagerregal mit den Merkmalen des Anspruchs 1 vorgeschlagen.

Vorteilhafte Ausgestaltungen sind Gegenstand der abhängigen Ansprüche 2 bis 10.

Das erfindungsgemäße Lagerregal zeichnet sich dadurch aus, dass die zweite Bedienöffnung an der Seitenwand des Gehäuses angeordnet ist und sich entlang einer Querrichtung des Lageregals erstreckt, wobei über die zweite Bedienöffnung ein seitlicher Zugang zu der Arbeitsfläche der ersten Bedienöffnung ermöglicht wird.

Über die zweite Bedienöffnung wird dem Lageristen ein seitlicher Zugang zu dem Tablar ermöglicht, wodurch er das Langgut entlang der Längsrichtung einschieben und entnehmen kann. Dies weist den Vorteil auf, dass das Langgut durch nur einen Lageristen manuell eingelagert werden kann. Durch die Zustellung über die zweite Bedienöffnung werden Verkantungen des Lagergutes und damit Beschädigungen vermieden. Somit ist eine einfache, gezielte und ergonomische Ein-und Auslagerung des Langgutes möglich.

Die zweite Bedienöffnung kann derart an der Seitenwand angeordnet sein, dass ein Zugang zu dem Tablar auf der Arbeitsfläche in der ersten Bedienöffnung ermöglicht wird. Alternativ kann die zweite Bedienöffnung derart angeordnet sein, dass ein Zugang zu dem Tablar, das sich auf der Transportvorrichtung befindet, ermöglicht wird.

Die Stirnseite verläuft entlang einer Längsrichtung des Lagerregals. Eine Querrichtung verläuft entlang der Seitenwand. Üblicherweise weist das Lagerregal in Längsrichtung eine größere Erstreckung als in Querrichtung auf.

Vorteilhaft weist das Lagerregal eine Vielzahl von Lagerplätzen auf, die durch übereinanderliegende und beabstandete Trägerauflagen gebildet werden, die paarweise an den sich gegenüberliegenden Seitenwände des Gehäuses zur Aufnahme der Tablare angeordnet sind, wobei die Tablare mittels der Transportvorrichtung den Lagerplätzen zustellbar oder entnehmbar sind. Ein derartiges Lagerregal wird als Vertikallift bezeichnet. Die Fläche über der ersten Bedienöffnung kann demnach zusätzlich zur Lagerung genutzt werden. Vor allem zeichnet sich ein derartiges Lagerregal besonders durch die schnellen Lager- und Zugriffszeiten bei einer hohen Lagerverdichtung von insbesondere groß dimensionierten Teilen aus.

Alternativ kann das Lagerregal als Umlaufregal mit einer umlaufenden Transportvorrichtung ausgebildet sein. Dabei wird das Lagergut mittels einer Umlaufbewegung der Transportvorrichtung zu der ersten Bedienöffnung befördert. Derartige Umlaufregale werden häufig auch als Paternoster bezeichnet.

Vorteilhaft weist das Lagerregal einen Aufsatzrahmen zur Aufnahme des Langguts auf, der an dem Tablar aufgenommen wird. Der zusätzliche Aufsatzrahmen ist derart konzipiert, dass dieser auf das Tablar aufgesetzt werden kann. Dabei kann der Fuß des Tablars passgenau an eine hochstehende Seitenwand des Tablars angepasst sein, sodass der Aufsatzrahmen formschlüssig auf dem Tablar aufsitzt. Der Aufsatzrahmen ermöglicht es, dass das Lagergut nicht von dem Tablar rollt oder rutscht, insbesondere während des Transports mittels der Transportvorrichtung.

Hierfür kann der Aufsatzrahmen einen seitlichen Begrenzungsstab aufweisen, der senkrecht nach oben absteht. In einer vorteilhaften Ausgestaltung weist der Aufsatzrahmen eine Vielzahl an seitlichen und gegenüberliegenden Begrenzungsstäben auf. Diese können ferner einen Stabilisierungssteg aufweisen, der die Begrenzungsstäbe miteinander verbindet, wodurch die Steifigkeit erhöht wird.

In einer weiteren vorteilhaften Ausgestaltung ist der Aufsatzrahmen mit dem Tablar koppelbar. Die Kopplung kann eine lösbare Verbindung umfassen, wie beispielsweise eine Schraube, einen Bolzen, einen Spannverschluss zum schnellen Verbinden oder ein anderes geeignetes Mittel. Über die Kopplung wird sichergestellt, dass der Aufsatzrahmen nicht von dem Tablar kippt.

Vorteilhaft weist der Aufsatzrahmen Tragarme zum Abstützen des Langguts auf. Ferner ist es möglich, mittels übereinander angeordneter Tragarmen Langgut in mehreren Lagen innerhalb des Aufsatzrahmens zu lagern. Zugleich weist der Aufsatzrahmen dadurch ein nur geringes Gewicht auf und erhöht die Lagerverdichtung zusätzlich. Die Tragarme könne zwischen zwei gegenüberliegenden seitlichen Begrenzungsstäben getragen werden.

Vorteilhaft weist der Aufsatzrahmen eine Einschubeinheit, insbesondere eine Rolle, auf, die das Langgut abstützt. Hierdurch wird die Ein-und Auslagerung des Langgutes auf dem Aufsatzrahmen erleichtert. Die Einschubeinheit kann eine Rolle umfassen oder nur eine Abdeckung aus einem Material zum Schutz vor Beschädigungen des Langguts, zum Beispiel Kratzern. Als Material für die Abdeckung kann ein Kunststoff mit hohen Gleiteigenschaften Verwendung finden, wie beispielsweise Polytertrafluorethylen (Teflon) oder Polyoxymethylene (POM). Ferner ist es auch möglich, auf jedem Tragarm des Aufsatzrahmens eine derartige Einschubeinheit vorzusehen. Diese ermöglicht ein besonders leichtes und das Material schonendes Verschieben des Lagergutes.

Vorteilhaft weist der Aufsatzrahmen einzelne Fächer auf. Die einzelnen Fächer ermöglichen es, dass das Langgut einzeln entnommen werden kann. Zur Abgrenzung der Fächer können einzelne Begrenzungsmittel vorgesehen sein, die an den Tragarmen jeweils befestigt sind. Ferner wird das Langgut durch Stapeln des Langguts nicht beschädigt.

Vorteilhaft weist die zweite Bedienöffnung eine Einschubeinheit auf, die das Lagergut bei der Ein-und Auslagerung abstützt. Die Einschubeinheit kann durch die untere Kannte der Bedienöffnung oder durch ein zusätzlich angebrachtes Mittel gebildet werden. Mittels der Einschubeinheit wird es dem Lageristen erleichtert, das Langgut einzuschieben. Die Einschubeinheit kann eine oder mehrere Rollen umfassen oder nur eine Abdeckung aus einem Material mit guten Gleiteigenschaften. Als Material für die Abdeckung kann ein Kunststoff, beispielsweise Polytertrafluorethylen (Teflon) oder Polyoxymethylene (POM) verwendet werden.

Vorteilhaft ist die zweite Bedienöffnung mittels einer Verschließeinrichtung, insbesondere eines Rollladens oder eines manuell oder automatisch verschiebbaren Schließelements, verschließbar. Die Verschließeinrichtung erhöht die Betriebssicherheit, da während des normalen Betriebs kein seitlicher Zugang möglich ist. Demnach ist es nicht möglich, versehentlich in diesen Bereich einzudringen.

Nachfolgend werden Ausführungsformen des erfindungsgemäßen Lagerregals und des Aufsatzrahmens näher beschrieben, die in schematischer Weise in den beigefügten Zeichnungen dargestellt sind. Hierbei zeigt:
- Fig. 1: eine erste Ausführungsform eines erfindungsgemäßes Lagerregal in perspektiver Darstellung;
- Fig. 2: einen Aufsatzrahmen für ein Lagerregal gemäß Fig.1;
- Fig. 3: ein Ausschnitt des erfindungsgemäßen Lagerregals in perspektiver Darstellung und
- Fig. 4: eine Seitenansicht auf eine zweite Ausführungsform eines erfindungsgemäßen Lagerregals.

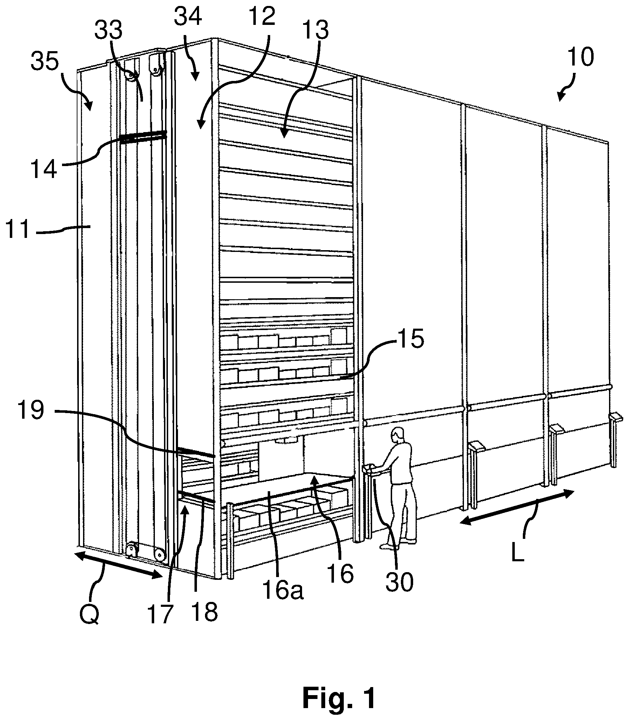

Fig. 1 zeigt eine perspektivische Ansicht eines Lagerregals 10 zur Lagerung von Langgut 24, wie beispielsweise einem Aluminiumprofil oder einer Dachrinne, die eine Länge von etwa 2 bis 5 m aufweisen können.

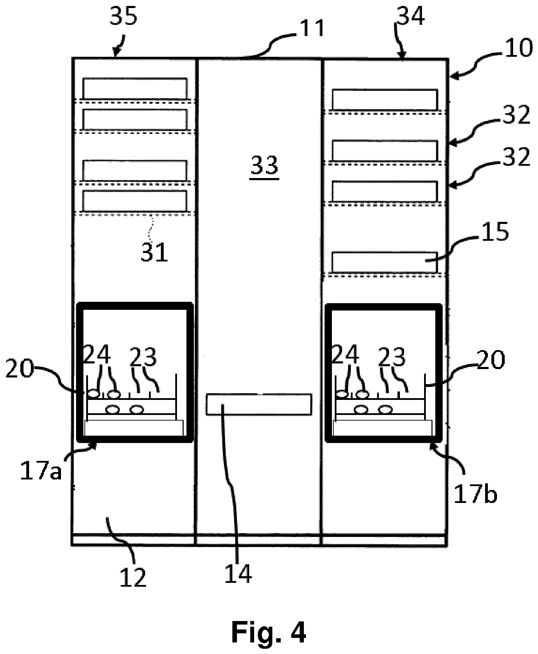

Das Lagerregal 10, das als Vertikallift ausgebildet ist, umfasst zwei mit Abstand zueinander angeordneten Regale 34, 35, die jeweils von einem Gehäuse 11 umschlossen sind. Die Regale 34, 35 weisen parallel zueinander ausgerichtete Seitenwände 12 auf. In jedem Regal 34, 35 sind, wie in Fig. 4 gezeigt, eine Vielzahl von Lagerplätzen 32 mit übereinander liegenden und beabstandeten Trägerauflagen 31 angeordnet. Die Lagerplätze 32 sind ausgebildet, Tablare 15, auf denen Lagergut oder Langgut 24 gelagert ist, aufzunehmen. Zwischen den Regalen 34, 35 befindet sich ein Transportschacht 33, in dem eine Transportvorrichtung 14 auf- und abbewegbar ist. Die steuerbare Transportvorrichtung 14 kann über den Transportschacht 33 die Tablare 15 in die Lagerplätze 32 stellen oder aus diesen entnehmen.

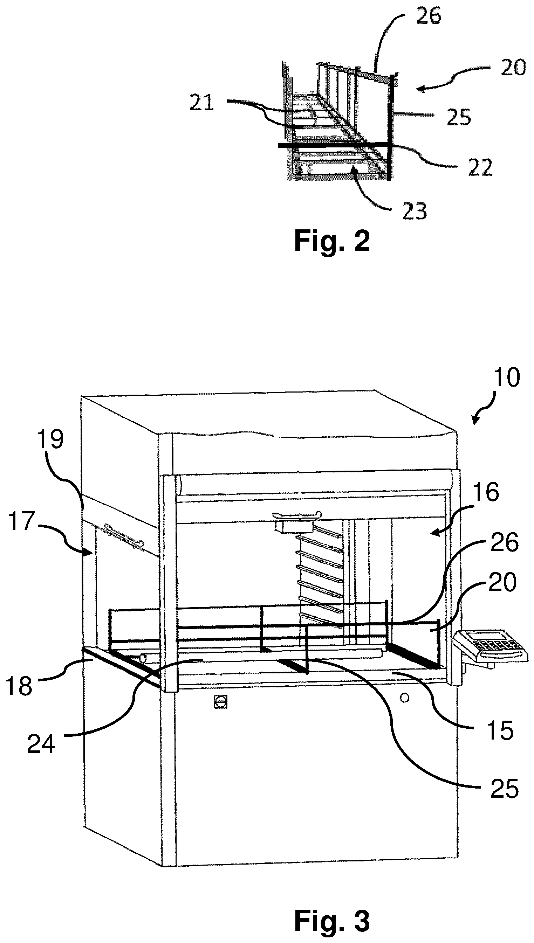

Zur Beschickung oder Entnahme des Lagergutes 24 durch einen Lageristen weist das Lagerregal 10 eine erste Bedienöffnung 16 und eine zweite Bedienöffnung 17 auf. Diese sind in Fig. 3 vergrößert dargestellt.

Die erste Bedienöffnung 16 ist an einer Stirnseite 13 des Lagerregals 10 angeordnet, die sich entlang einer Längsrichtung L des Lagerregals 10 erstreckt. Die erste Bedienöffnung 16 weist einen Arbeitsfläche 16a auf, auf welche das Tablar 15 zur Beschickung und/oder Entnahme von der Transportvorrichtung 14 eingeführt werden kann. Der Lagerist kann sodann Lagergut über die erste Bedienöffnung 16 händisch in das Tablar 15 einlegen. Das Lagerregal 10 kann auch mehrere erste Bedienöffnungen 16 aufweisen. Diese können nebeneinander und/oder jeweils auf beiden Seiten der gegenüberliegenden Regale 34, 35 angeordnet sein.

Die zweite Bedienöffnung 17 ist an der Seitenwand 12 des Lagerregals 10 angeordnet und erstreckt sich entlang einer Querrichtung Q. Über die zweite Bedienöffnung 17 wird ein seitlicher Zugang zu der Arbeitsfläche 16a der ersten Bedienöffnung 16 ermöglicht.

Die zweite Bedienöffnung 17 weist eine Einschubeinheit 18 auf, die das Langgut 24 während der Ein-und Auslagerung abstützt. Die Einschubeinheit 18 ist relativ zu der Arbeitsfläche 16a erhöht angeordnet. In Fig. 1 ist diese Einschubeinheit 18 als Rolle dargestellt wohingegen die Einschubeinheit 18 in Fig. 3 als Abdeckung der unteren Kannte der zweiten Bedienöffnung 17 dargestellt ist.

Ferner weist die zweite Bedienöffnung 17 eine Verschließeinrichtung 19 auf, die den Zugang zu der Arbeitsfläche 16a verschließen kann. Die Verschließeinrichtung kann als Rollladen ausgebildet sein.

Wie in Fig. 3 und Fig. 4 dargestellt, ist auf dem Tablar ein Aufsatzrahmen 20 angeordnet. Der Aufsatzrahmen 20 ist in Fig. 2 separat dargestellt. Dieser kann mit einer Kopplungseinrichtung mit dem Tablar 20 fest verbunden werden.

Wie in Fig. 2 dargestellt, weist der Aufsatzrahmen 20 in Längsrichtung beabstandete Tragarme 21 und seitliche Begrenzungsstäbe 25 auf, welche Ablagefacher 23 für Langgut 24 bilden. Die dargestellten Begrenzungsstäbe 25 sind über einen Stabilisierungssteg 26 verbunden. Wie in Fig. 4 dargestellt, können die Tragarme 21 zusätzlich übereinander angeordnet sein. Des Weiteren können zusätzliche Begrenzungsstäbe 25 an den Tragarmen 21 angeordnet sein, die eine Vielzahl an Fächern 23 bilden. Zur Erleichterung der Ein- oder Auslagerung von Langgut 24 kann der Aufsatzrahmen 20 eine Einschubeinheit 22 aufweisen. Diese kann als Rolle ausgebildet sein oder lediglich eine Abdeckung aus einem Kunststoffmaterial mit guten Gleiteigenschaften aufweisen, wie beispielsweise PTFE oder POM. Die Abdeckung kann auf jedem der Tragarme 21 angebracht sein.

Das in Fig. 4 gezeigte Lagerregal 10 stellt eine weitere mögliche Ausgestaltung des in Fig. 1 und Fig. 3 gezeigten Lagerregals 10 dar. Identische oder funktionsgleiche Bauteile können die gleichen Bezugszeichen aufweisen.

Bei dieser Ausführungsform des Lagerregals 10 ist dem Regal 34 und dem Regal 35 jeweils eine zweite Bedienöffnungen 17a, 17b zugeordnet. Diese sind durch den Transportschacht 33 getrennt und nebeneinander an der Seitenwand 12 angeordnet.

Mithilfe der zweiten Bedienöffnung 17 kann der Lagerist auf besonders ergonomische Weise Langgut 24 in das Lagerregal 10 einschieben oder aus einem derartigen Lagerregal 10 entnehmen. Beschädigungen an dem Langgut 24 werden vermieden, da das Langut 24 in seiner Längsrichtung zugestellt wird. Der Aufsatzrahmen 20 begünstigt eine geordnete Ablage des Langgutes 24.

### Bezugszeichenliste

- 10: Lagerregal
- 11: Gehäuse
- 12: Seitenwand
- 13: Stirnseite
- 14: Transportvorrichtung
- 15: Tablar
- 16: Erste Bedienöffnung
- 16a: Arbeitsfläche
- 17: Zweite Bedienöffnung
- 17a, 17b: Zweite Bedienöffnung
- 18: Einschubeinheit
- 19: Verschließeinrichtung
- 20: Aufsatzrahmen
- 21: Tragarm
- 22: Einschubeinheit
- 23: Fach
- 24: Langgut
- 25: Seitlicher Begrenzungsstab
- 26: Stabilisierungssteg

- 30: Bedieneinheit
- 31: Trägerauflage
- 32: Lagerplätze
- 33: Transportschacht
- 34: Regal
- 35: Regal

- L: Längsrichtung
- Q: Querrichtung

## Patentansprüche

1. Lagerregal (10) zur Lagerung von Langgut (24), wie beispielsweise einem Aluminiumprofil oder einer Dachrinne,
mit einem Gehäuse (11), das von sich gegenüberliegenden Seitenwänden (12) begrenzt ist, zur Aufnahme einer Vielzahl von Tablaren (15), in denen das Langgut aufgenommen wird,
mit einer Transportvorrichtung (14) zum automatisierten Transportieren der Tablare (15);
mit einer ersten Bedienöffnung (16), die an einer Stirnseite (13) des Gehäuses (11) angeordnet ist und die sich entlang einer Längsrichtung (L) des Lagerregals (10) erstreckt, wobei die erste Bedienöffnung (16) eine Arbeitsfläche (16a) aufweist, auf welche ein Tablar (15) zur Beschickung und/oder Entnahme von der Transportvorrichtung (14) eingeführt wird; und
mit einer zweiten Bedienöffnung (17),
**dadurch gekennzeichnet, dass** die zweite Bedienöffnung (17) an der Seitenwand (12) des Gehäuses (11) angeordnet ist und sich entlang einer Querrichtung (Q) des Lageregals (10) erstreckt, wobei über die zweite Bedienöffnung (17) ein seitlicher Zugang zu der Arbeitsfläche (16a) der ersten Bedienöffnung (16) ermöglicht wird.

2. Lagerregal (10) nach Anspruch1, **gekennzeichnet durch** eine Vielzahl von Lagerplätzen, die durch übereinanderliegende und beabstandete Trägerauflagen (31) gebildet werden, die paarweise an den sich gegenüberliegenden Seitenwänden (12) des Gehäuses (11) zur Aufnahme der Tablare (15) angeordnet sind, wobei die Tablare (15) mittels der Transportvorrichtung (14) den Lagerplätzen zustellbar oder entnehmbar sind.

3. Lagerregal (10) nach Anspruch 1, **dadurch gekennzeichnet, dass** das Lagerregal als Umlaufregal mit einer umlaufenden Transportvorrichtung (14) ausgebildet ist.

4. Lagerregal (10) nach einem der Ansprüche 1 bis 3, **gekennzeichnet durch** einen Aufsatzrahmen (20) zur Aufnahme des Langguts, der an dem Tablar (15) aufgenommen wird.

5. Lagerregal (10) nach Anspruch 4, **dadurch gekennzeichnet, dass** der Aufsatzrahmen (20) mit dem Tablar (15) koppelbar ist.

6. Lagerregal (10) nach Anspruch 4 oder 5, **dadurch gekennzeichnet, dass** der Aufsatzrahmen (20) Tragarme (21) zum Abstützen des Langguts aufweist.

7. Lagerregal (10) nach einem der Ansprüche 4 bis 6 **dadurch gekennzeichnet, dass** der Aufsatzrahmen (20) eine Einschubeinheit (22), insbesondere eine Rolle, aufweist, auf der sich das Langgut abstützt.

8. Lagerregal (10) nach einem der Ansprüche 4 bis 7, **dadurch gekennzeichnet, dass** der Aufsatzrahmen (20) einzelne Fächer (23) aufweist.

9. Lagerregal (10) nach einem der Ansprüche 4 bis 8 **dadurch gekennzeichnet, dass** die zweite Bedienöffnung (17) eine Einschubeinheit (18) aufweist, die das Lagergut abstützt.

10. Lagerregal (10) nach einem der Ansprüche 4 bis 9 **dadurch gekennzeichnet, dass** die zweite Bedienöffnung (17) mittels einer Verschließeinrichtung (19), insbesondere einem Rollladen oder einem Schließelement, verschließbar ist.

## Claims

1. Storage rack (10) for storing long items (24), such as an aluminum profile or a gutter,
comprising a housing (11) bounded by opposing side walls (12) for accommodating a plurality of trays (15) in which the long items are accommodated,
comprising a transport device (14) for automatically transporting the trays (15);
comprising a first access opening (16) arranged on an end face (13) of the housing (11) and extending along a longitudinal direction (L) of the storage rack (10), wherein the first access opening (16) comprises a work surface (16a) onto which a tray (15) is introduced from the transport device (14) for loading and/or unloading; and
comprising a second access opening (17),
**characterized in that** the second access opening (17) is arranged on the side wall (12) of the housing (11) and ex-tends along a transverse direction (Q) of the storage rack (10), wherein the second access opening (17) provides lateral access to the work surface (16a) of the first access opening (16).

2. Storage rack (10) according to claim 1, **characterized by** a plurality of storage locations formed by superimposed and spaced-apart support rests (31) arranged in pairs on the opposing side walls (12) of the housing (11) for accommodating the trays (15), wherein the trays (15) can be transferred to or removed from the storage locations by means of the transport device (14).

3. Storage rack (10) according to claim 1, **characterized in that** the storage rack is designed as a carousel rack with a circulating transport device (14).

4. Storage rack (10) according to any one of claims 1 through 3, **characterized by** an attachment frame (20) for accommodating the long items, which is mounted on the tray (15).

5. Storage rack (10) according to claim 4, **characterized in that** the attachment frame (20) can be coupled to the tray (15).

6. Storage rack (10) according to claim 4 or 5, **characterized in that** the attachment frame (20) comprises support arms (21) for supporting the long items.

7. Storage rack (10) according to any one of claims 4 through 6, **characterized in that** the attachment frame (20) comprises an insertion unit (22), in particular a roller, on which the long items rest.

8. Storage rack (10) according to any one of claims 4 through 7, **characterized in that** the attachment frame (20) comprises individual compartments (23).

9. Storage rack (10) according to any one of claims 4 through 8, **characterized in that** the second access opening (17) comprises an insertion unit (18) that supports the long items.

10. Storage rack (10) according to any one of claims 4 through 9, **characterized in that** the second access opening (17) can be closed by means of a closing device (19), in particular a roller shutter or a closing element.

## Revendications

1. Rayonnage de stockage (10) destiné au stockage d'articles allongés (24), tels qu'un profilé en aluminium ou une gouttière,
comprenant un boîtier (11) délimité par des parois latérales opposées (12), destiné à recevoir une pluralité de plateaux (15) dans lesquels les articles allongés sont logés,
comprenant un dispositif de transport (14) destiné au transport automatisé des plateaux (15) ;
comprenant une première ouverture de service (16) qui est disposée sur une face frontale (13) du boîtier (11) et qui s'étend le long d'une direction longitudinale (L) du rayonnage de stockage (10), la première ouverture de service (16) comportant une surface de travail (16a) sur laquelle un plateau (15) est introduit depuis le dispositif de transport (14) pour le chargement et/ou le déchargement ; et
comprenant une deuxième ouverture de service (17),
**caractérisé en ce que** la deuxième ouverture de service (17) est disposée sur la paroi latérale (12) du boîtier (11) et s'étend le long d'une direction transversale (Q) du rayonnage de stockage (10), la deuxième ouverture de service (17) permettant un accès latéral à la surface de travail (16a) de la première ouverture de service (16).

2. Rayonnage de stockage (10) selon la revendication 1, **caractérisé par** une pluralité d'emplacements de stockage formés par des supports (31) superposés et espacés, qui sont disposés par paires sur les parois latérales opposées (12) du boîtier (11) pour recevoir les plateaux (15), les plateaux (15) pouvant être amenés vers les emplacements de stockage ou retirés de ceux-ci au moyen du dispositif de transport (14).

3. Rayonnage de stockage (10) selon la revendication 1, **caractérisé en ce que** le rayonnage de stockage est conçu comme un rayonnage à circulation doté d'un dispositif de transport (14) circulant.

4. Rayonnage de stockage (10) selon l'une des revendications 1 à 3, **caractérisé par** un cadre rapporté (20) destiné à recevoir les articles allongés, qui est monté sur le plateau (15).

5. Rayonnage de stockage (10) selon la revendication 4, **caractérisé en ce que** le cadre rapporté (20) peut être couplé au plateau (15).

6. Rayonnage de stockage (10) selon la revendication 4 ou 5, **caractérisé en ce que** le cadre rapporté (20) comporte des bras de support (21) destinés à soutenir les articles allongés.

7. Rayonnage de stockage (10) selon l'une des revendications 4 à 6, **caractérisé en ce que** le cadre rapporté (20) comporte une unité d'insertion (22), en particulier un rouleau, sur laquelle les articles allongés prennent appui.

8. Rayonnage de stockage (10) selon l'une des revendications 4 à 7, **caractérisé en ce que** le cadre rapporté (20) comporte des compartiments individuels (23).

9. Rayonnage de stockage (10) selon l'une des revendications 4 à 8, **caractérisé en ce que** la deuxième ouverture de service (17) comporte une unité d'insertion (18) qui soutient les articles allongés.

10. Rayonnage de stockage (10) selon l'une des revendications 4 à 9, **caractérisé en ce que** la deuxième ouverture de service (17) peut être fermée au moyen d'un dispositif de fermeture (19), en particulier un volet roulant ou un élément de fermeture.
